# EUROPEAN PATENT APPLICATION

(11) **EP 2 999 263 A1**
(43) Date of publication of application: **23.03.2016**
(21) Application number: 13884938.5
(22) Date of filing: 13.05.2013
(51) Int. Cl.: H04W 36/00

(54) **METHOD FOR DETERMINING MOBILITY OF USER EQUIPMENT WITH DUAL CONNECTIONS IN COMMUNICATIONS SYSTEM**

(71) Applicant: Alcatel Lucent, 92100 Boulogne-Billancourt (FR)
(72) Inventor: DENG, Yun, Shanghai 201206 (CN); CAI, Liyu, Shanghai 201206 (CN)
(74) Representative: 2SPL Patentanwälte PartG mbB
(86) International application number: PCT/CN2013/075544
(87) International publication number: WO 2014/183252

(57) **Abstract**

The present invention provides a method of determining mobility of a user equipment having dual connectivity in a communication system. In one embodiment, the user equipment transmits measurement reports in a frequency occupied by the source small cell to the source small cell, such that the source small cell determines that a target small cell replaces itself to serve the user equipment. In another embodiment, the user equipment transmits measurement reports in a frequency occupied by the source small cell to the macro cell, such that the macro cell determines that a target small replaces the source small cell to serve the user equipment.

## Description

### FIELD OF THE INVENTION

The present invention relates to a communication system, and more specifically to a method for determining mobility of a user equipment having dual connectivity in a communication system.

### BACKGROUND OF THE INVENTION

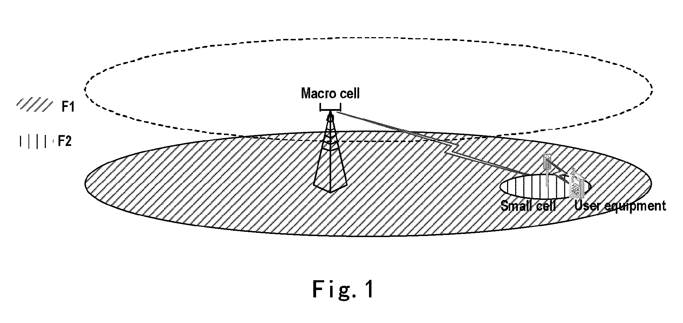

Further enhancements for indoor and outdoor scenarios using low-power nodes were identified as one of the most important topics in the 3GPP workshop on Rel-12 and onward. Fig. 1 illustrates a potential applicable scenario for small cells. Many small cells are under coverage of a macro cell. A user equipment (UE) is served by the macro cell and a small cell simultaneously. The macro cell adopts the legacy frequency and owns large coverage, while the small cell adopts higher frequency such as 3.5GHz, which only has small coverage. When the UE is served by the macro cell and small cell illustrated in Fig. 1, the UE needs to perform carrier aggregation for inter-site. In Release 10, LTE-A has introduced carrier aggregation, which can only be applicable in a scenario of a same site or different sites but having an ideal backhaul (with a one-way delay of nearly 0, which may satisfy an extremely high transmission capacity requirements).

For inter-site scenario, i.e., as illustrated in Fig. 1, if the backhaul between the macro cell and the small cell is ideal, the current carrier aggregation can be reused (if time synchronization is also satisfied between the macro cell and the small cell). Under this situation, we can assume that there is only one RRC connection for the UE.

However, if the backhaul is non-ideal, and based on the data provided by the carrier, the one-way delay for the non-ideal backhaul varies from 2ms to 60ms, the current carrier aggregation mechanism cannot be applicable. Distributed scheduling is suitable because the macro cell cannot know detailed status information of the small cell in real-time due to backhaul latency. Under this situation, it is better for the small cell to have part RRC functionality such as RRM (Radio Resource Management) for intra-frequency. For example, the small cell can directly transmit the resource configuration information of its own to the UE. Thus, the UE has dual connectivity.

Once the UE has dual connectivity, movement of the UE will result in mobility between different small cells. However, the existing mobility procedure cannot be applicable in the case where the UE has dual connectivity. For example, when the backhaul between the macro cell and the small cell will cause 60ms latency in one way, if the macro cell performs mobility decision for the small cell frequency, it will too later for the small cell to know the mobility decision, which will cause resource waste in the source small cell because the source small cell may persist on allocating resources for this UE.

### SUMMARY OF THE INVENTION

In light of the above considerations, the present invention provides a mobility procedure applicable to a user equipment having dual connectivity.

According to one aspect of the present invention, there is provided a method for determining, in a source small cell, mobility of a user equipment, the source small cell being within a coverage area of a macro cell, the user equipment being simultaneously served by the macro cell and the source small cell, wherein the method comprises steps of:
a. coordinating with the macro cell about resources allocated to the user equipment, and providing configuration information on the source small cell to the macro cell;
b. receiving at least part of downlink data from the macro cell for transmission to the user equipment when the user equipment accesses the source small cell;
c. interacting with the user equipment such that the user equipment accesses the source cell;
d. receiving, from the user equipment, measurement reports in a frequency occupied by the source small cell, or receiving, from the user equipment, measurement reports in frequencies occupied by all of small cells;
e. determining, based on the measurement reports, that a target small cell replaces the source small cell to serve the user equipment;
f. coordinating with the target small cell about resources allocated to the user equipment, and obtaining configuration information on the target small cell from the target small cell; and
g. transmitting the configuration information on the target small cell to the user equipment, and releasing the resources allocated by the source small cell to the user equipment.

Advantageously, the step g further comprises:
- informing the macro cell of which DRBs are established in the target small cell and/or which DRBs are not established in the target small cell, so that the macro cell transmits downlink data corresponding to the DRBs established in the target small cell to the target small cell.

Advantageously, when only partial DRBs are established in the target small cell, the step g further comprises:
- transmitting, to the macro cell, undelivered data that corresponds to the DRBs which are not established in the target small cell.

Advantageously, the step g further comprises:
- transmitting, to the target small cell, data that corresponds to the DRBs which are established in the target small cell and has not be delivered by the source small cell to the user equipment.

According to another aspect of the present invention, there is provided a method for assisting, in a user equipment, a source small cell in determining mobility of the user equipment, the source small cell being within a coverage area of a macro cell, the user equipment being simultaneously served by the macro cell and the source small cell, wherein the method comprising steps of:
i. receiving configuration information on the source small cell from the macro cell;
ii. accessing the source small cell;
iii. transmitting measurement reports in a frequency occupied by the source small cell to the source small cell and transmitting measurement reports in other frequencies to the macro cell, or transmitting measurement reports in a frequency occupied by a small cell to the source small cell and transmitting measurement reports in other frequencies to the macro cell;
iv. receiving configuration information on the target small cell from the source small cell; and
v. accessing the target small cell.

Advantageously, the step ii comprises steps of:
- performing random access in the source small cell; and
- receiving a random access response transmitted from the source small cell.

Advantageously, the step ii further comprises steps of:
- receiving an activated indicator for the source small cell from the macro cell; and
- receiving downlink control information in the source small cell so as to obtain a random access trigger.

According to a further aspect of the present invention, there is provided a method for assisting, in a macro cell, a source small cell in determining mobility of a user equipment, the source small cell being within a coverage area of the macro cell, the user equipment being simultaneously served by the macro cell and the source small cell, wherein the method comprises steps of:
A. configuring a small cell for the user equipment based on channel condition and throughput requirements;
B. coordinating with the source small cell about resources allocated to the user equipment, and obtaining configuration information on the source small cell;
C. transmitting the configuration information on the source small cell to the user equipment, and transmitting at least part of downlink data to the source small cell for transmission to the user equipment when the user equipment accesses the source small cell; and
D. receiving an informing message from the source small cell, the informing message being used for informing the macro cell of which DRBs are established in the target small cell and/or which DRBs are not established in the target small cell, so that the macro cell transmits downlink data corresponding to DRBs established in the target small cell to the target small cell.

Advantageously, the method further comprises a step of:
- transmitting, to the user equipment or to the target small cell, data that corresponds to the DRBs which are established in the target small cell and has not be delivered by the source small cell to the user equipment.

According to a still further aspect of the present invention, there is provided a method for assisting, in a macro cell, a source small cell in determining mobility of a user equipment, the source small cell being within a coverage area of the macro cell, the user equipment being simultaneously served by the macro cell and the source small cell, wherein the method comprises steps of:
- configuring a small cell for the user equipment based on channel condition and throughput requirements;
- coordinating with the source small cell about resources allocated to the user equipment, and obtaining configuration information on the source small cell;
- transmitting the configuration information on the source small cell to the user equipment, and transmitting at least part of downlink data to the source small cell for transmission to the user equipment when the user equipment accesses the source small cell; and
- receiving an informing message from a target small cell, the informing message being used for informing the macro cell of which DRBs are established in the target small cell and/or which DRBs are not established in the target cell, so that the macro cell transmits downlink data corresponding to the DRBs established in the target cell to the target cell.

According to a yet further aspect of the present invention, there is provided a method for assisting, in a target small cell, a source small cell in determining mobility of a user equipment, the source small cell being within a coverage area of a macro cell, the user equipment being simultaneously served by the macro cell and the source small cell, wherein the method comprises steps of:
I. coordinating with the source small cell about resources allocated to the user equipment, and providing configuration information on the target small cell to the source small cell; and
II. interacting with the user equipment so that the user equipment to access the target small cell.

Advantageously, there further comprises a step after the step II:
- informing the macro cell of which DRBs are established in the target small cell and/or which DRBs are not established in the target small cell, so that the macro cell transmits downlink data corresponding to the DRBs established in the target small cell to the target small cell.

Advantageously, there further comprises a step after the step I and before the step II:
- receiving, at the source small cell, data that corresponds to the DRBs which are established in the target small cell and has not be delivered by the source small cell to the user equipment.

### BRIEF DESCRIPTION OF THE ACCOMPANYING DRAWINGS

Other objectives, features, and advantages of the present invention will become more apparent and outstanding through reading the following depiction of the non-limiting embodiments with reference to the accompanying drawings.
Fig. 1 shows a network architecture of a user equipment having dual connectivity according to one embodiment of the present invention;
Fig. 2 shows a flow diagram of a method for determining, in a source small cell, mobility of a user equipment according to one embodiment of the present invention;
Fig. 3 shows a flow diagram of a method for determining, in a source small cell, mobility of a user equipment according to another embodiment of the present invention;
Fig. 4 shows a flow diagram of a method for determining, in a macro cell, mobility of a user equipment according to one embodiment of the present invention;
Fig. 5 shows a schematic diagram of an architecture for PDCP split;
Fig. 6 shows a schematic diagram of an architecture for RLC split.

In the accompanying drawings, same or like reference numerals represent same or like step features/means (modules).

### DETAILED DESCRIPTION OF THE PREFERRED EMBODIMENTS

Embodiment 1: a small cell makes a mobility decision for a user equipment at a frequency occupied by the small cell.

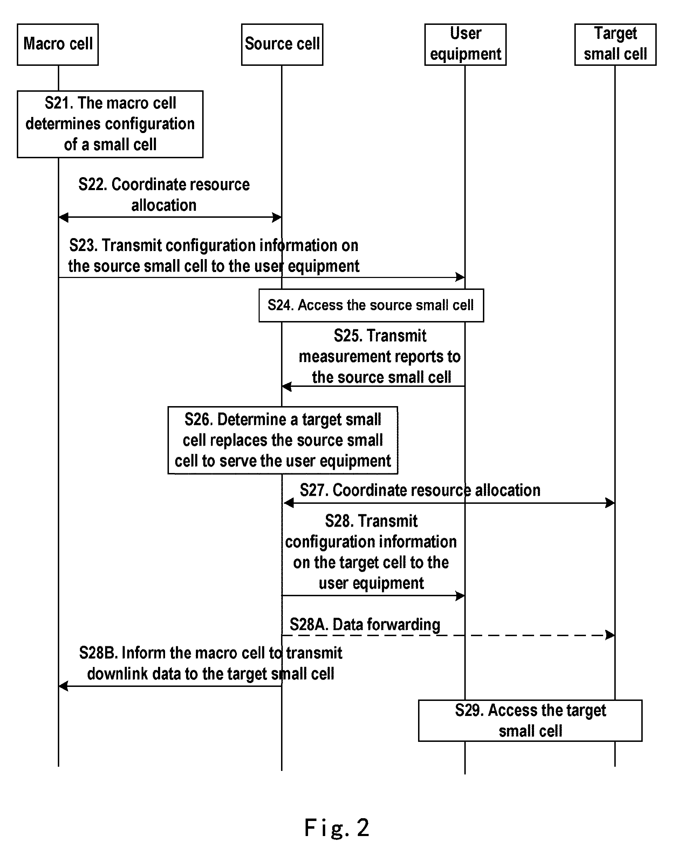

Hereinafter, the present embodiment will be illustrated with reference to Fig. 2.

In step S21, at first, the user equipment only accesses a macro cell. At this point, the user only has one RRC connection with the macro cell. The macro cell configures a small cell for the user equipment based on channel condition and throughput requirements of the user equipment.

In step S22, the macro cell coordinates with the source small cell about resources allocated to the user equipment and obtains from the source small cell configuration information on the source small cell. For example, if the equipment needs to perform random access in the source small cell so as to obtain timing advance, the macro cell coordinates with the source small cell about random access resources allocated to the user equipment; the source small cell allocates to the user equipment a cell radio network temporary identifier (C-RNTI) at the source small cell, and the macro cell obtains the C-RNTI allocated by the source small cell to the user equipment.

In step S23, the macro cell sends at least part of downlink data to the source small cell, so as to be transmitted to the user equipment when the user equipment accesses the source small cell; and the macro cell sends the obtained configuration information on the source small cell to the user equipment.

The configuration information on the source small cell includes:
- frequency and bandwidth occupied by the source small cell;
- antenna configuration of the source small cell;
- physical cell identifier of the source small cell;
- common channel configuration, such as random access channel configuration, PDSCH (Physical Downlink Shared Channel) configuration, etc.;
- a timing advance group (TAG) configuration in the source small cell if different timing advance (TA) is between the macro cell and the source small cell;
- C-RNTI allocated by the source small cell to the user equipment;
- DRB configuration (including its QoS (Quality of Service)) established in the source small cell; and
- SRB configuration established in the source small cell (the SRB is used for partial RRM function in the source small cell).

In step S24, the user equipment receives from the macro cell the configuration information on the source cell and accesses the source small cell. At this time, the user equipment has dual connectivity.

Specifically, at first, the user equipment considers the source small cell as deactivated; after the user equipment receives from the macro cell an activated indicator for the source small cell in MAC CE (Medium Access Control Control Element), the user equipment begins to monitor downlink control information (DCI) in the source small cell. The user equipment receives DCI from the source small cell so as to know a random access trigger. Then, the user equipment performs random access in the source small cell and receives a random access response sent from the source small cell. Alternatively, another implementation may be adopted, where the user equipment considers the source small cell as activated, and directly initiates a random access in the source small cell based on the obtained configuration information on the source small cell. If the random access process succeeds in the source small cell, the user equipment accesses the source small cell successfully. At this point, the user equipment has dual connectivity to the macro cell and the source small cell.

When the user equipment has dual connectivity, the protocol architecture comprises an enhanced user plane architecture and an enhanced control plane architecture.

### ➢ User Plane Architecture

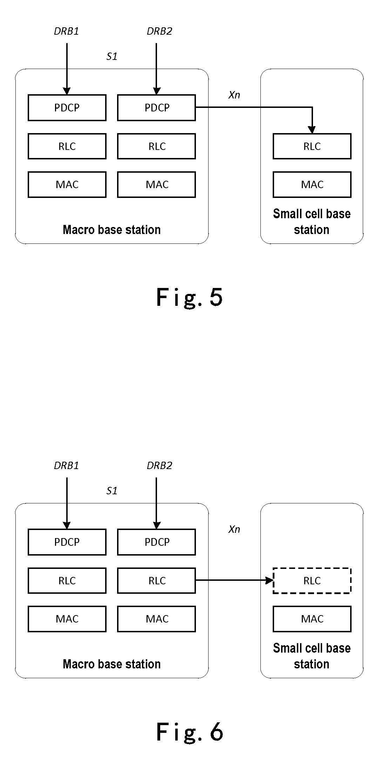

There are different alternatives for the user plane architecture. PDCP split (Packet Data Convergence Protocol split) and RLC split (Radio Link Control split) architectures have a higher possibility to be adopted by 3GPP. The PDCP split refers to that downlink data of a certain DRB (data radio bearer) (which is obtained from the core network and transmitted by the core network to a macro base station via an S 1 interface) is split by a PDCP entity of a macro cell, where part or all of the user data are allocated to a RLC entity in a base station of the small cell via an interface Xn (for the DRB, there is one PDCP entity in a macro cell base station, and there are two RLC entities in the macro cell base station and the small cell base station), the part or all of the user data is then transmitted to the user equipment through an underlying MAC layer and physical layer. The schematic diagram of the PDCP split architecture is shown in Fig. 5, where the illustrated interface Xn represents an enhancement for an existing X2 interface. The RLC split refers to that downlink data of a certain DRB is split by a RLC entity in the macro cell, where part of all of the user data are allocated to an RLC sub-layer entity in a base station of the small cell (for the DRB, there is one PDCP entity and one RLC entity in the macro cell base station, and there is one RLC sub-layer entity in the small cell base station, the sub-layer entity has a segmentation and reorganization function; there is one MAC entity in the macro cell base station and the small cell base station, respectively), the part of all of data is then transmitted to the user equipment through an underlying MAC layer and physical layer. For the PDCP split architecture, when all of downlink data of a certain DRB are transmitted to the user equipment by a small cell, the macro cell base station may not include a RLC entity for the DRB. The schematic diagram of the RLC split architecture is shown in Fig. 6.

### ➢ Control Plane Architecture

A macro cell has a large coverage. Therefore, it is reasonable to locate major control functions such as NAC (Non Access Stratum) exchange, paging, and receiving system messages in a macro cell, which guarantees better performance but less impact on the core network (i.e., less handover). However, a small cell base station may still need to have partial RRM (radio resource management) function due to local (or distributed) schedule. For example, the small cell base station can configure or re-configure the corresponding parameters about its local schedule through RRC for the user equipment such as radio bearer related parameters; the small cell base station can obtain measurement reports in a designated frequency (e.g., the frequency occupied by the small cell) from the user equipment directly so that it can perform inter-small-cell interference coordination when performing local schedule.

In step S25, the user equipment sends measurement reports to the source small cell. In one example, the measurement reports may be measurement reports in a frequency occupied by the source small cell. The source small cell needs this type of measurement reports for distributed scheduling, inter-small-cell interference coordination, and making a mobility decision on the frequency. The user equipment will send measurement reports in other frequencies to the macro cell for making a mobility decision by the macro cell.

In other examples, if there is more than one frequency to deploy the small cell, for example, F1 and F2 also can be deployed with the small cell, the user equipment may send the measurement reports in the more than one frequency to the source small cell, such that the source small cell can make a mobility decision for the more than one frequency.

In this step, assuming that the source small cell base station has partial RRM functions, e.g., receiving the measurement reports sent by the user equipment, performing mobility management at the small cell level; and configuring parameters considering distributed scheduling in the source small cell.

In step S26, the source small cell determines, based on the measurement reports, to use a target small cell to replace itself to serve the user equipment.

In step S27, the source small cell coordinates with the target small cell about resources allocated to the user equipment, and obtains, from the target small cell, configuration information on the target small cell. For example, if the user equipment needs to perform random access in the target small cell so as to obtain timing advance, the source small cell coordinates with the target small cell about random access resource allocated to the user equipment via an X2 interface; the source small cell obtains the C-RNTI allocated to the user equipment by the target small cell via the X2 interface. If there is no X2 interface between the source small cell and the target small cell, the source small cell may coordinate resource allocation with the target small cell via the macro cell.

In this step, the target small cell may not accept all DRBs (Data Radio Bearer) requested to be established by the source small cell. In some cases, only partial DRBs will be allowed to establish in the target small cell.

In step S28, the source small cell sends configuration information on the target small cell to the user equipment, and releases the resource allocated to the user equipment by the source small cell.

configuration information on the target small cell includes: frequency and bandwidth occupied by the target small cell; antenna configuration of the target small cell; physical cell identifier of the target small cell; DRBs configuration that will be established in the target small cell, and C-RNTI allocated to the user equipment by the target small cell, etc.

If only partial DRBs are established in the target small cell, the configuration information on the target small cell sent by the source small cell to the user equipment only includes the partial DRBs.

Optionally, in step S28A, the source small cell may send, to the target small cell, data corresponding to the DRBs that will be established in the target small cell but having not been delivered by the present source small cell to the user equipment yet.

If the PDCP split architecture is adopted, the following two solutions may be used to avoid data loss during mobility:
Solution 1: the RLC PDU in the source small cell which has not been delivered needs to be forwarded to the target small cell. These two small cells need to establish tunnel to transfer undelivered RLC PDUs.
Solution 2: if the PDCP entity in the macro cell base station can record which PDCP PDUs are allocated to the source small cell or have a retransmission function, the macro cell can send, to the user equipment, the data corresponding to the DRBs that will be established in the target small cell but having not been delivered by the source small cell to the user equipment; or the macro cell can send, to the target small cell, the data corresponding to the DRBs that will be established in the target small cell but having not been delivered by the source small cell to the user equipment, and then the target small cell sends the received data to the user equipment.

If the RLC split architecture is adopted, the RLC entity in the macro cell base station can send, to the target small cell, the RLC PDUs that has not been delivered.

If only partial DRBs are established in the target small cell, for the DRBs that are not established in the target cell, if the DPCP split architecture is adopted, the source small cell should send, to the macro cell, the data corresponding to the DRBs that are not established in the target small and having not been delivered.

In step S28B, the source small cell informs the macro cell of which DRBs are established in the target small cell and/or which DRBs are not established in the target small cell, so as to be available for the macro cell to send downlink data corresponding to the DRBs established in the target small cell to the target small cell.

It should be noted that the above steps S28, S28A, and S28B may be performed by the source small cell in parallel.

In step S29, the user equipment receives configuration information on the target small cell from the source small cell and accesses the target small cell.

Specifically, at first, the user equipment considers the target small cell as deactivated. When the user equipment receives an MAC CE command with an activated indicator from the macro cell, the user equipment starts to monitor DCI in the target small cell; or the user equipment directly initiates a random access in the target small cell based on the configuration information on the target small cell. The user equipment receives a random access response in the target small cell.

The user equipment can know whether the random access process in the target small cell is necessary from configuration information on the target small cell. For example, if the small cell and the macro cell belong to different timing advance groups, the user equipment needs to perform random access in the target small cell so as to obtain timing advance. The user equipment may receive DCI from the target small cell so as to obtain a random access trigger, wherein the DCI may include a dedicated random access preamble; or the user equipment directly initiates a random access in the target small cell. If the random access process in the target small cell is successful, the user equipment successfully accesses the target small cell.

In this step, if the PDCP split architecture is adopted for the user plane, then the user equipment needs to re-establish RLC for the DRBs that will be established in the target small cell. For the PDCP architecture or RLC architecture, the MAC is reset for the target small cell.

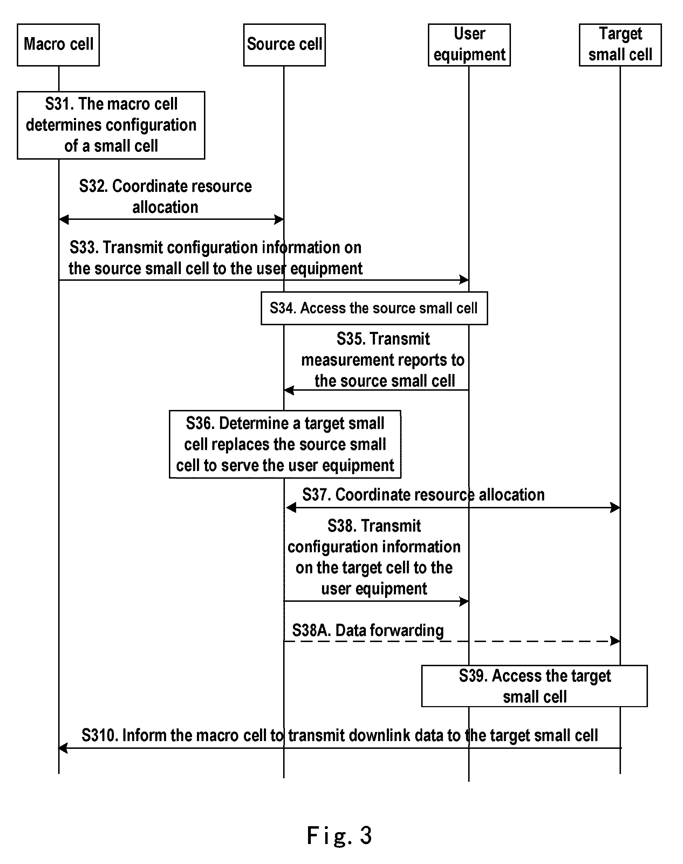

In a variant embodiment, as shown in Fig. 3, the user equipment first accesses the target small cell (step S39), and then the target small cell informs the macro cell of which DRBs are established in the present target small cell and/or which DRBs are not established in the present target small cell, so as to be available for the macro cell to send, to the present target cell, downlink data corresponding to the DRBs established in the present target cell (step S310). Remaining steps S31-S38A in Fig. 3 are similar to steps S21-S28A in Fig. 2. For the sake of conciseness, they will not be repeated. However, in step S39, the user equipment directly initiates a random access in the target small cell based on configuration information on the target small cell.

In the present embodiment, the source small cell may find a target small cell which continues to serve the user equipment based on the measurement reports sent by the user equipment. If no small cell that may serve the user equipment exists, the source small cell directly releases a connection between itself and the user equipment; the source small cell needs to forward to the macro cell the RLC PDU of the source small cell which has not been transmitted yet (for the PDCP split architecture). At this point, the user equipment only maintains a single RRC connection with the macro cell.

Embodiment 2: the macro cell makes a mobility decision for the frequency occupied by the small cell

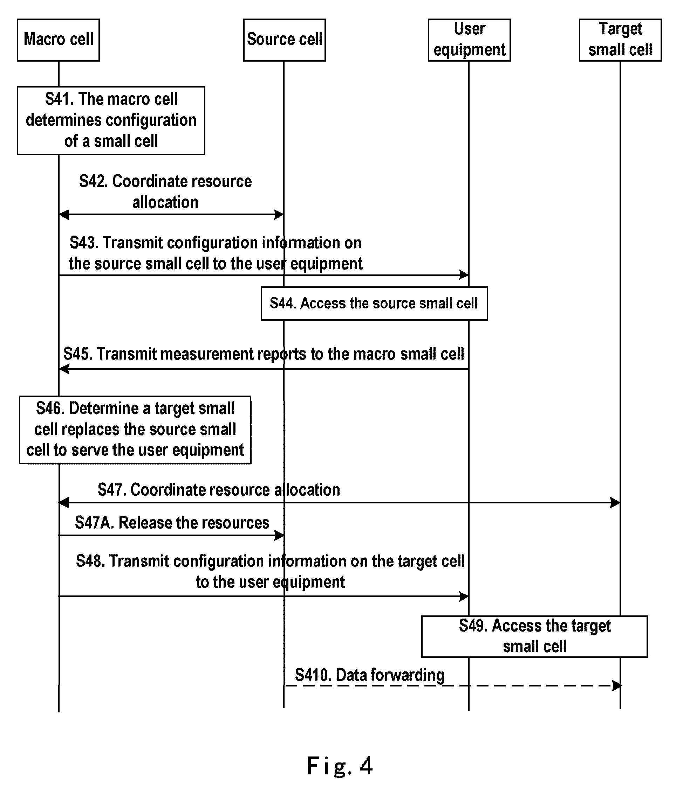

In this embodiment, the macro cell receives from the user equipment measurement reports in the frequency occupied by the source cell; therefore, the macro cell makes a mobility decision for the frequency occupied by the source small cell, as shown in Fig. 4.

This embodiment differs from the embodiment of Fig. 2 in that:
in step S45, the user equipment sends the measurement reports in the frequency occupied by the source small cell to the macro cell, such that the macro cell makes a mobility decision for the frequency occupied by the source small cell. Therefore, in step S46, the macro cell determines to use a target small cell to replace the source small cell to server the user equipment.

It should be noted that the user equipment also sends measurement reports in the frequency occupied by the source small cell to the source small cell, such that the source small cell can perform a distributed scheduling and possible inter-small-cell interference coordination.
- in step S48, the macro cell sends configuration information on the target small cell to the user equipment.
- After the macro cell determines to use the target small cell to replace the source small cell to serve the user equipment, in step S47A, the macro cell informs the source small cell to release the resource allocated to the user equipment. In the release message, the macro cell can inform the source small cell of the target small cell to which the user equipment will be connected, such that if the DPCP split architecture is adopted, the source small cell can forward, to the target small cell, the RLC PDU that has not been delivered. For the RLC split architecture, step S410 does not exist.

Other than the above distinctive steps, the remaining steps in Fig. 4 are similar to steps in Fig. 2. For the sake of brevity, they will not be repeated here.

Although the present invention has been illustrated and described in detail in the accompanying drawings and the above description, it should be appreciated that the illustration and depiction are of an illustrative and exemplary nature, not limitative; the present invention is not limited to the above embodiments.

The skilled in the art may understand and implement other alterations of the disclosed embodiments through studying the description, the disclosed content, the accompanying drawings, and the appended claims. In the claims, the wording "comprise" does not exclude other elements and steps, and the wording "one" does not exclude plurality. In actual applications of the present invention, one part may perform functions of a plurality of technical features recited in the claims. No reference numerals in the claims should be construed as limitation to the scope.

## Claims

1. A method for determining mobility of a user equipment in a source small cell, the source small cell being within a coverage area of a macro cell, the user equipment being simultaneously served by the macro cell and the source small cell, wherein the method comprises steps of:
a. coordinating with the macro cell about resources allocated to the user equipment, and providing configuration information on the source small cell to the macro cell;
b. receiving at least part of downlink data from the macro cell for transmission to the user equipment when the user equipment accesses the source small cell;
c. interacting with the user equipment such that the user equipment accesses the source cell;
d. receiving, from the user equipment, measurement reports in a frequency occupied by the source small cell, or receiving, from the user equipment, measurement reports in frequencies occupied by all of small cells;
e. determining, based on the measurement reports, that a target small cell replaces the source small cell to serve the user equipment;
f. coordinating with the target small cell about resources allocated to the user equipment, and obtaining configuration information on the target small cell from the target small cell; and
g. transmitting the configuration information on the target small cell to the user equipment, and releasing the resources allocated by the source small cell to the user equipment.

2. The method according to claim 1, **characterized in that** the step g further comprises:
- informing the macro cell of which DRBs are established in the target small cell and/or which DRBs are not established in the target small cell, so that the macro cell transmits downlink data corresponding to the DRBs established in the target small cell to the target small cell.

3. The method according to claim 2, **characterized in that** when only partial DRBs are established in the target small cell, the step g further comprises:
- transmitting, to the macro cell, undelivered data that corresponds to the DRBs which are not established in the target small cell.

4. The method according to claim 2, **characterized in that** the step g further comprises:
- transmitting, to the target small cell, data that corresponds to the DRBs which are established in the target small cell and has not be delivered by the source small cell to the user equipment.

5. The method according to claim 1, **characterized in that** the configuration information on the source small cell includes:
- a frequency and a bandwidth occupied by the source small cell;
- an antenna configuration of the source small cell;
- a physical cell identifier of the source small cell;
- a common channel configuration;
- a timing advance group configuration of the source small cell if there are different timing advances between the macro cell and the source small cell;
- a radio network temporary identifier allocated by the source small cell to the user equipment;
- a DRB configuration established in the source small cell; and
- a SRB configuration established in the source small cell; and
the configuration information on the target small cell includes:
- a frequency and a bandwidth occupied by the target small cell;
- an antenna configuration of the target small cell;
- a radio network temporary identifier allocated by the target small cell to the user equipment;
- a physical cell identifier of the target small cell;
- a DRB configuration established in the target small cell; and
- a SRB configuration established in the target small cell.

6. A method for assisting, in a user equipment, a source small cell in determining mobility of the user equipment, the source small cell being within a coverage area of a macro cell, the user equipment being simultaneously served by the macro cell and the source small cell, wherein the method comprising steps of:
i. receiving configuration information on the source small cell from the macro cell;
ii. accessing the source small cell;
iii. transmitting measurement reports in a frequency occupied by the source small cell to the source small cell and transmitting measurement reports in other frequencies to the macro cell, or transmitting measurement reports in a frequency occupied by a small cell to the source small cell and transmitting measurement reports in other frequencies to the macro cell;
iv. receiving configuration information on the target small cell from the source small cell; and
v. accessing the target small cell.

7. The method according to claim 6, **characterized in that** the step ii comprises steps of:
- performing random access in the source small cell; and
- receiving a random access response transmitted from the source small cell.

8. The method according to claim 7, **characterized in that** the step ii further comprises steps of:
- receiving an activated indicator for the source small cell from the macro cell; and
- receiving downlink control information in the source small cell so as to obtain a random access trigger.

9. A method for assisting, in a macro cell, a source small cell in determining mobility of a user equipment, the source small cell being within a coverage area of the macro cell, the user equipment being simultaneously served by the macro cell and the source small cell, wherein the method comprises steps of:
A. configuring a small cell for the user equipment based on channel condition and throughput requirements;
B. coordinating with the source small cell about resources allocated to the user equipment, and obtaining configuration information on the source small cell;
C. transmitting the configuration information on the source small cell to the user equipment, and transmitting at least part of downlink data to the source small cell for transmission to the user equipment when the user equipment accesses the source small cell;
D. receiving an informing message from the source small cell, the informing message being used for informing the macro cell of which DRBs are established in the target small cell and/or which DRBs are not established in the target small cell, so that the macro cell transmits downlink data corresponding to DRBs established in the target small cell to the target small cell.

10. The method according to claim 9, **characterized in that** the method further comprises a step of:
- transmitting, to the user equipment or to the target small cell, data that corresponds to the DRBs which are established in the target small cell and has not be delivered by the source small cell to the user equipment.

11. A method for assisting, in a macro cell, a source small cell in determining mobility of a user equipment, the source small cell being within a coverage area of the macro cell, the user equipment being simultaneously served by the macro cell and the source small cell, wherein the method comprises steps of:
- configuring a small cell for the user equipment based on channel condition and throughput requirements;
- coordinating with the source small cell about resources allocated to the user equipment, and obtaining configuration information on the source small cell;
- transmitting the configuration information on the source small cell to the user equipment, and transmitting at least part of downlink data to the source small cell for transmission to the user equipment when the user equipment accesses the source small cell;
- receiving an informing message from a target small cell, the informing message being used for informing the macro cell of which DRBs are established in the target small cell and/or which DRBs are not established in the target cell, so that the macro cell transmits downlink data corresponding to the DRBs established in the target cell to the target cell.

12. A method for assisting, in a target small cell, a source small cell in determining mobility of a user equipment, the source small cell being within a coverage area of a macro cell, the user equipment being simultaneously served by the macro cell and the source small cell, wherein the method comprises steps of:
I. coordinating with the source small cell about resources allocated to the user equipment, and providing configuration information on the target small cell to the source small cell; and
II. interacting with the user equipment so that the user equipment to access the target small cell.

13. The method according to claim 12, **characterized in that** the method further comprises a step after the step II:
- informing the macro cell of which DRBs are established in the target small cell and/or which DRBs are not established in the target small cell, so that the macro cell transmits downlink data corresponding to the DRBs established in the target small cell to the target small cell.

14. The method according to claim 12, **characterized in that** the method further comprises a step after the step I and before the step II:
- receiving, at the source small cell, data that corresponds to the DRBs which are established in the target small cell and has not be delivered by the source small cell to the user equipment.
